Europäisches Patentamt

European Patent Office

Office européen des brevets

(11) Publication number: **0 229 082**
**B1**

# (12) EUROPEAN PATENT SPECIFICATION

(45) Date of publication of patent specification: **25.04.90**

(21) Application number: **86903160.9**

(22) Date of filing: **04.06.86**

(86) International application number:
**PCT/AU86/00164**

(87) International publication number:
**WO 87/00228 15.01.87 Gazette 87/01**

(51) Int. Cl.⁵: **E 04 H 4/06, A 63 C 19/12**

## (54) RETRACTABLE COVER.

(30) Priority: **28.06.85 AU 1249/85**
**24.10.85 AU 3079/85**
**21.02.86 AU 4726/86**

(43) Date of publication of application:
**22.07.87 Bulletin 87/30**

(45) Publication of the grant of the patent:
**25.04.90 Bulletin 90/17**

(84) Designated Contracting States:
**BE CH DE FR GB IT LI NL SE**

(56) References cited:
**AU-A-1 961 783**
**GB-A-1 529 670**
**US-A-2 898 607**
**US-A-4 324 370**
**US-A-4 459 711**
**US-A-4 467 978**
**US-A-4 471 500**

(73) Proprietor: **COUSINS, Neville Lawrence**
**70 Muston Street**
**Mosman, NSW 2088 (AU)**

(72) Inventor: **NORRIS, Kevin, Noel**
**42 Stuart Avenue**
**Normanhurst, NSW 2076 (AU)**
Inventor: **DOBBYNS, Vaughan**
**36 Chelmsford Avenue**
**Lindfield, NSW 2070 (AU)**
Inventor: **RICHARDS, David, Alexander**
**847 Forest Road**
**Peakhurst, NSW 2210 (AU)**
Inventor: **GARROOD, Stephen, Thomas**
**70 George Street**
**The Rocks, NSW 2000 (AU)**

(74) Representative: **Perry, Robert Edward et al**
**GILL JENNINGS & EVERY 53-64 Chancery Lane**
**London WC2A 1HN (GB)**

Courier Press, Leamington Spa, England.

## Description

This invention relates to a retracting cover device for covering structures such as vehicles, swimming pools and boats. The cover device is primarily designed to protect the structure from the weather but, in a preferred embodiment, an intrusion and theft alarm is provided.

Covers may be unfolded, and spread over a structure by hand. Then, when the cover is not required, it is removed, folded and then stowed somewhere, by hand, until required again.

US—A—4459711 discloses a retracting cover device, for covering a swimming pool, comprising a flexible sheet as a cover, a reel rotatably mounted on reel support means for winding on the winding off the cover, and retracting mechanism for rotating the reel.

A retracting cover device according to this invention is of the type described above, in which the reel is narrow compared to the cover, and which comprises means for gathering the cover, to enable it to be wound on to the narrow reel.

A retracting cover device of the invention can be used for a structure such as a vehicle, swimming pool or boat.

Where it is desirable to protect the retracted cover, such as when the device is mounted under a vehicle, an enclosure or housing is provided and this housing would normally form part of the reel support means.

The cover is usually of light-weight material, and may be shower-proof and unaffected by the elements. The cover is wide enough to cover the top of the structure, and the sides as well where necessary. A funnel-shaped chute or collector bell mouth is provided to gather the cover to feed it either directly or through a delivery tube to the reel in the housing. These components may be fitted as original equipment and built into the structure at any convenient position. Alternatively, the device may be fitted as a unit to an existing structure.

An alarm system may be incorporated into the cover to prevent unauthorised access to the structure or theft of the cover itself.

The reel may be rotated by an electric motor and in this case disengaging means may be provided between the reel and the motor so that the reel can free-wheel when the cover is being manually withdrawn from the housing.

A spring motor arrangement may also be used to rotate the reel.

By way of example only, the invention is now described with reference to the accompanying drawings in which:

Fig. 1 is a general layout of the cover device.

Fig. 2 is an electrically driven example with a first disengaging means.

Fig. 3 is an electrically driven example with a second disengaging means.

Figs. 4A to 4E is an electrically driven example with a third disengaging means.

Fig. 5 is a spring driven example.

Fig. 6 is an example of the electronics for retraction control and an alarm system.

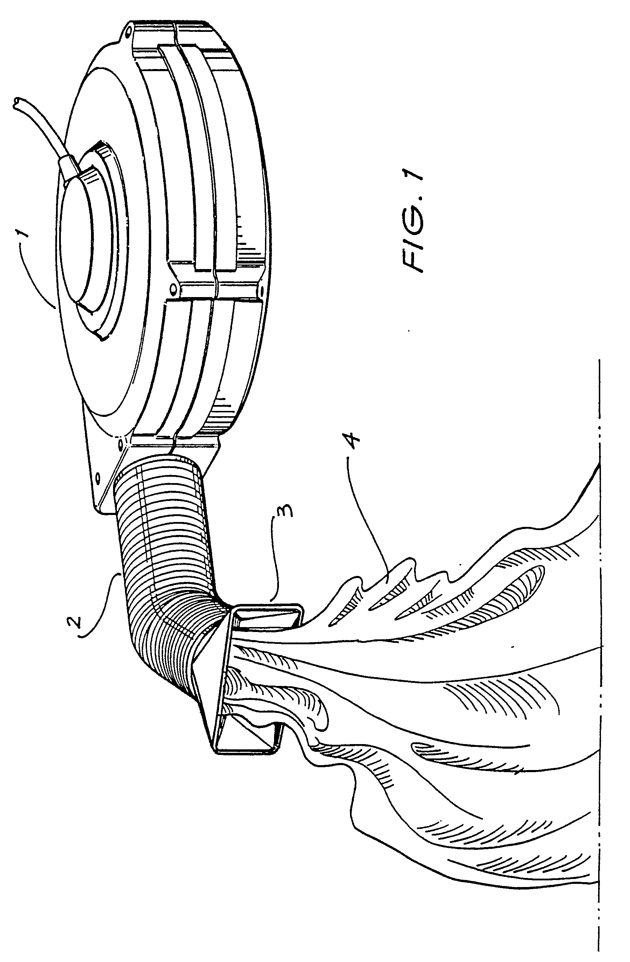

Fig. 1 shows a general arrangement of the cover device in which the housing 1 is connected to the delivery shute 2 having a bell mouth 3 at its outer end through which the cover 4 is gathered and withdrawn onto the reel. The housing 1 would usually be of generally cylindrical shape to house the reel. The available space, say under a motor vehicle, would also have a bearing on the size and shape of the housing. The bell mouth could be positioned in an outer body panel of a motor vehicle or under the front or rear ends of the motor vehicle. While the bell mouth 3 may be fitted directly onto the housing 1 the positioning of the housing may make it necessary to have a delivery shute to convey the cover from the bell mouth 3 into the housing 1. While the size and shape of the bell mouth and delivery tube are not critical there dimenions must be such that the wider cover is gathered so that it will wind onto the relatively narrow reel. As example, a (3 inches) 8 cm diameter bell mouth or a rectangular bell mouth (4 inches) 10 cm by 2 inches (5 cms) effectively gather a (9 ft) 3 m wide cover for guiding the cover into a (3 inch) 8 cm delivery tube then through a similar sized opening in the housing and onto a 4 inch (10 cms) wide reel. The housing 1 may have drainage holes for any water that may collect inside and part of the housing may be detachable so the cover can be removed for cleaning.

In one form the cover is attached to the drum by a short length of cable so that when the cover is fully extracted it is free of the bell mouth 3. The cable may be provided with a flexible steel core to provide physical strength and an insulated copper conductor or conductors for electrical connection to the alarm system in the cover. When the cover is retracted a blanking plug, attached to the outer end of the cover may be drawn into the bell mouth where it may lock into position. The blanking plug would be drawn into position by the retracting means.

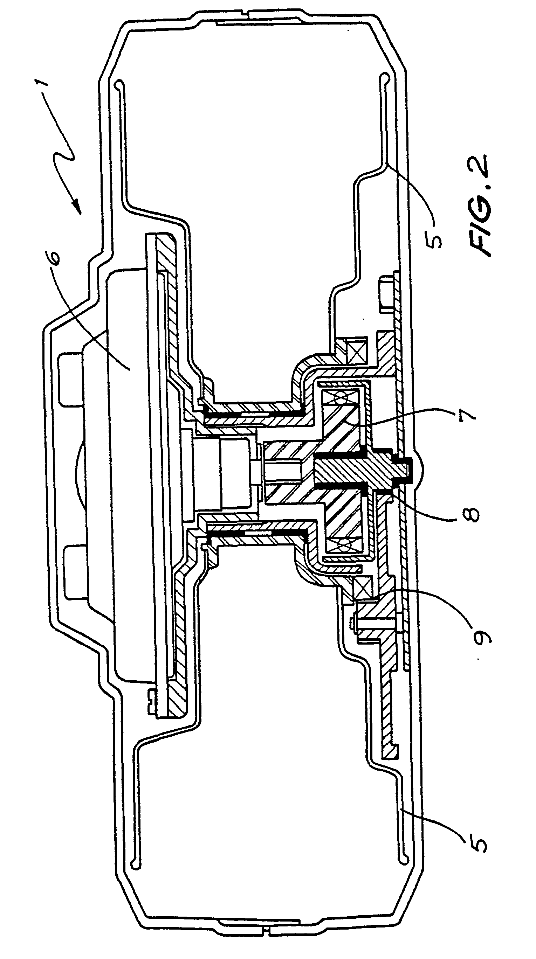

Fig. 2 shows the housing 1 which contains an electrically driven reel with disengaging means so that the reel can free-wheel when the cover is being withdrawn. The reel 5 is rotated by an electric motor 6 for winding on the gathered cover and the cover is unwound by the user pulling it out of the bell mouth. Disengaging means between the motor 6 and the reel 5 are provided so that the reel free-wheels when the cover is being withdrawn.

In one form the disengaging means comprises a centrifical clutch 7 designed to engage when the electric motor reaches approximately 1500 r.p.m. A series of reduction gears 8 and 9 reduce the rotational speed of the reel to about 60 r.p.m.

The electric motor 6 may be controlled by a switch attached to the outer end of the car cover. The free end of the cover may also contain a mechanical lock which may be lockable over the bell mouth to provide security for the cover when stowed. When the cover is over the car the switch and lock is locked to a fitting on the car for physical security and also for a possible alarm circuit.

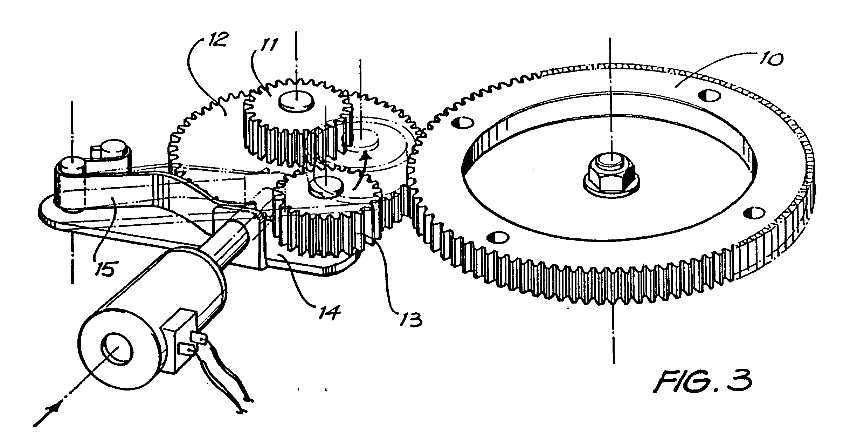

Fig. 3 shows another form of disengaging means. Gear 10 is driven by the motor 6 and gears 11 and 12 drive the reel, sprocket 13 is mounted on a pivotted arm 14 such that when the switch to initiate retraction is switch on the solenoid is energized and the sprocket 13 is moved into engagement between the gears 10 and 11 so that the reel is rotated. When the current is switch off spring 15 disengages the sprocket 13. The same switch could be used to energize both the solenoid and the motor.

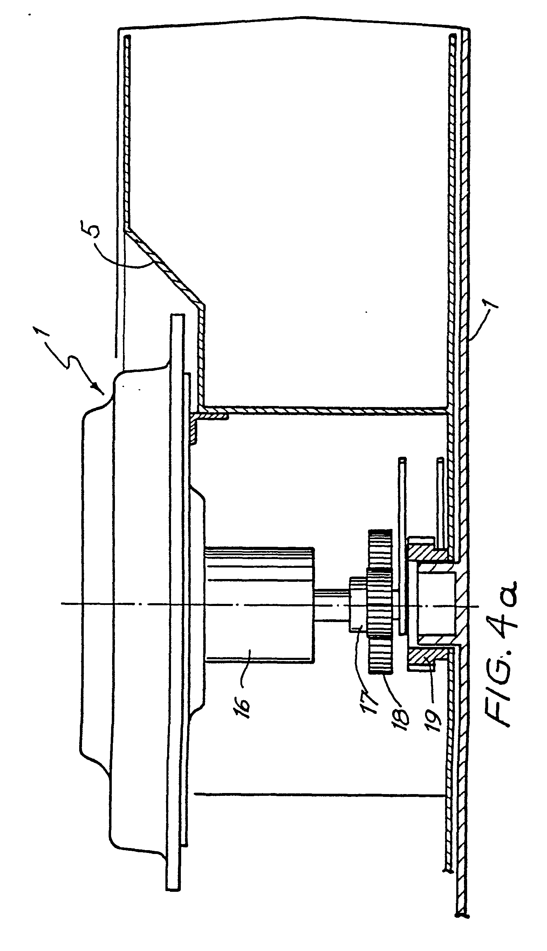

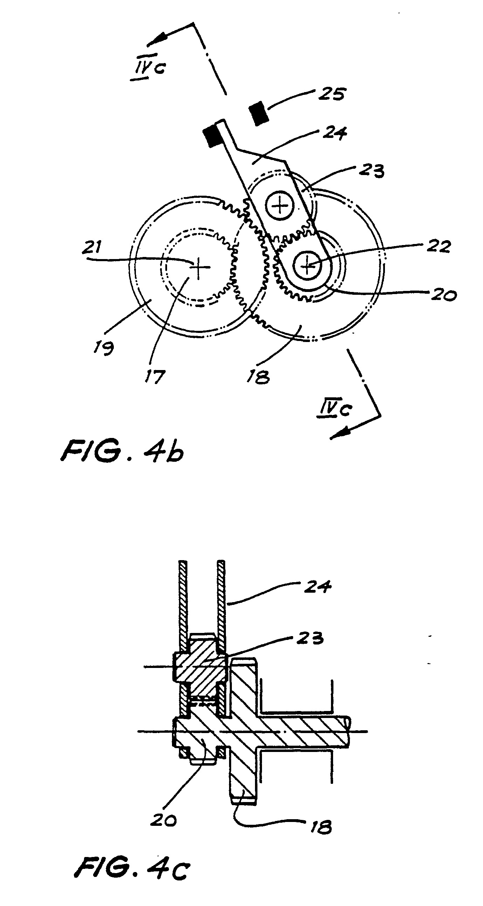

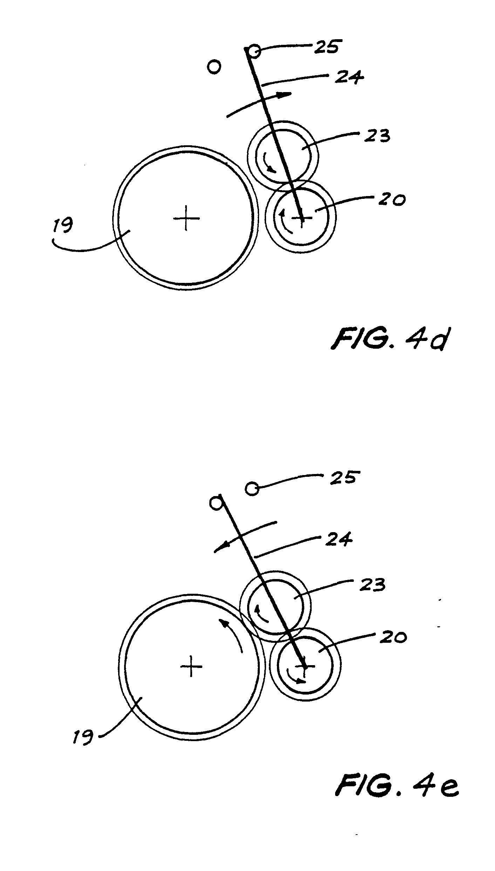

Figs. 4a, 4b, 4c, 4d and 4e show another form of disengaging means.

A motor gear box arrangement 16 drives a pinion 17 which measures with a gear 18, gears 19 and 20 have fixed centers at 21 and 22 and do not mesh. Gear 23 is mounted on an arm 24 which is free to pivot about point 22. Gears 20 and 23 are permanently meshed. Stops 25 limit the movement of the arm 24 and the gear 23.

If the motor drives gear 18 and hence gear 20 in an anticlockwise direction the arm 24 will also move in an anticlockwise direction and the gear 23 will mesh with the gear 19 thus rotating the reel. In this position the forces on the teeth of the gears are such as to hold gear 23 in engagement with gear 19.

If the motor is now stopped and then reversed in direction the gear 20 rotates in a clockwise direction and causes the arm 24 to move in a clockwise direction until the stop 25 is reached at which time gear 23 is free of engagement with gear 19. The reel is then free to turn for withdrawal of the cover from the housing.

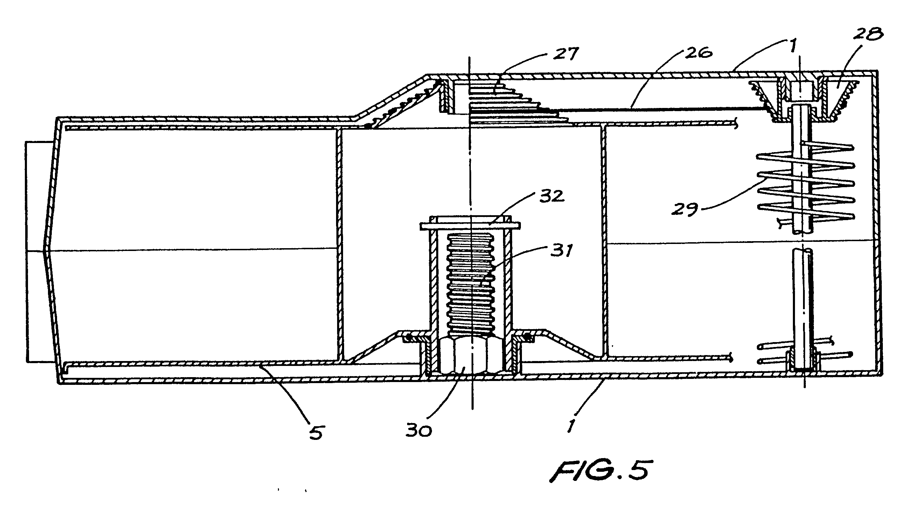

Fig. 5 shows an embodiment of the invention wherein the reel is rotated by the action of a spring. The basic characteristic of this type of mechanism is that energy is stored in the spring when the cover is withdrawn and this energy is later used to retract the cover. In any such device it is desirable to have some rewind tension available when the cover is completely retracted and this is accomplished by pretensioning of the spring.

When the cover is withdrawn the reel rotates and a cord 26 is wound onto the fusee pully 27. The cord is attached at its other end to a fusee pully 28 which is connected to the spring 29. At the start of the cover withdrawal the cord 26 is fully wound on the fusee pully 28. As the cover is withdrawn the cord 26 is wound off the pulley 28 onto the pully 27. The purpose of these pulley shapes is to provide equal tension of the cover during the pulling out and retracting. Knowing the maximum and minimum diametres of the cloth as it comes off the reel, the spring characteristics and the number of turns, it is possible by varying the diameter of one or both pullies to keep the tension on the cover constant.

By keeping to a minimum the number of revolutions of the reel to unwind the cover the number of grooves in the pullys is also kept small. To keep the reel revolutions to a minimum the minor diameter of the reel should be made as large as possible. This requirement must be balanced against the need to kept the overall size of the housing to a minimum.

Any spring return device will tend to use up all the energy stored in the spring when it retracts. In order to limit the number of turns that the reel can make it is proposed to have a limiting device. This may comprise a nut 30 rotatable on a screw 31. The screw 31 is fixed to the housing 1 and the nut 30 is driven up and down the screw 31 by the rotation of the reel 5, the nut 30 being free to slide but not to turn. The reel movement is limited by the housing 1 when screwed down and by the pin 32 when wound up.

Reference is now made to the electrical and electronic arrangements for the cover retraction and the intrusion alarm system.

The arrangements will use known techniques and will vary according to the type of structure to be covered and the sophistication of the control and alarm systems required. Referring first to the motor control arrangement, the stop, start and motor speed need to be controlled. This would usually be a position sensing device of the reel mounted at an appropriate place in the retractor assembly. Basically it would be a rotational sensor which feed information such as speed, direction and number of revolutions back to a central electronic unit. This device may be an optical infra red detector, variable reluctance, magnetic operated switch, capacitive coupling, multi turn potentiometer, brush contact type or mechanically operated switches.

The speed information can be used to detect an obstruction situation whilst the fabric on the cover is being retracted. Upon detecting this condition for a required time necessary to stop nuisance tripping the motor shall stop rotation. To restart, a small movement in the opposite direction shall serve as a signal that the obstruction has been removed and start retraction again. The two parameters used are the speed of obstruction detection and direction for restart the signal. A simpler way of restarting the motor would be to have at least an additional electric switch.

In one arrangement the controlling technique is pulse width modulation to ensure low current dissipation. Pulse generation is achieved by an infra red beam passing through a circle of teeth fitted to the reel, the interrupted beam inpinging on an infra red detector.

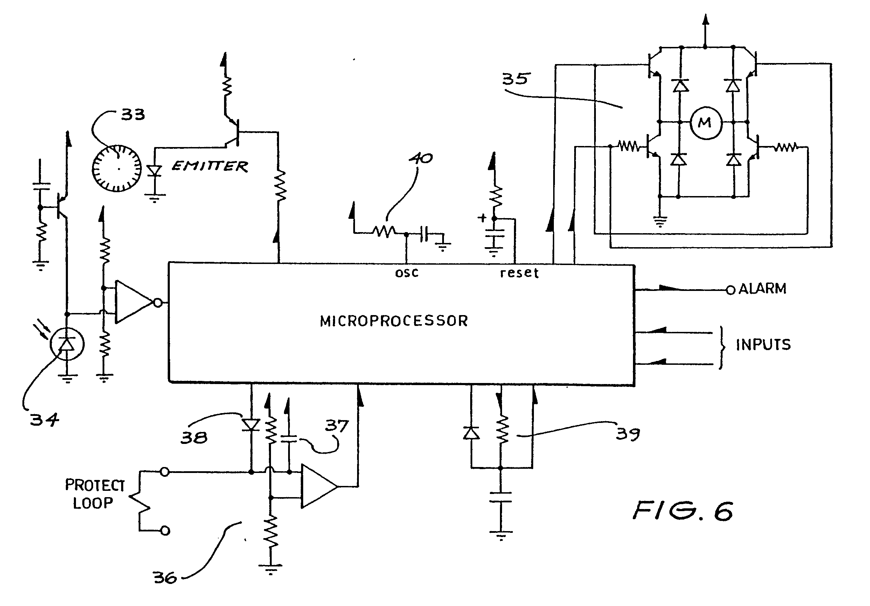

Reference will now be made to Fig. 6.

The ring of teeth or slots 33 is fixed to and rotates with the reel 5 and the pulse light signal falls on the photo diode 34. The resulting electrical pulses are red to the micro processor which interprets the pulses and transmits controlling signals to the motor control circuit 35.

Reference is now made to the alarm system.

By including a detection path in the cover itself then a fully detectable envelope is formed. Several methods may be used such as:—

1. A resistive loop formed by several parallel resistances integrated with the cover,

2. An RF coupling loop within the cover so a stepwise disturbance results in the alarm being activated,

3. Propagation (phase shift) through the cover; a pulse is emitted through the conductive path in the cover and its time delay measured and compared against the known standard, namely, the measured response when the alarm is activated; any disturbance such as cutting the fabric, disconnecting return path or shorting path out, would register as a tamper situation and activate the alarm,

4. Fiber optical system — a fine optical path can be implemented throughout the fabric in much the same manner as above.

A protective resistance loop system is shown at 36 on Fig. 6. When the alarm is switched on the capacitor 37 charges through the protective loop and the time taken to reach a reference voltage is measured by the micro processor and stored for subsequent reference. The micro processor initiates repeated readings of the condition of the resistive loop to determine its condition. Each time a reading is required the capacitor 37 is discharged by the micro processor through the diode 38. The capacitor 37 will then commence to charge and the time taken to reach the reference voltage is measured by the micro processor and compared with the reference time. This will give a measure of the condition of the resistance loop. As the reference time is assessed each time the alarm system is initially switched on this method allows for variation in the resistance of the loop due to varying weather conditions, lapse of time etc.

A look up time constant circuit 39 is used so that some adjustment of motor speed characteristics can be obtained in the event of different types of motors being used. A time constant is read and stored at regular intervals and provides an input to the speed determining circuitry.

One of the inputs would be from a manual key to enable the alarm system. There would be a time delay before the alarm is fully operational. Another key operated input signal may be used in relation to the bellmouth plug whereby the signal signifies a fully-home position to the micro processor so that any errors that may arise can be zeroed at each usage.

The cover device of the invention is designed for any application when a temporary cover is required and where easy to use retraction and neat storage of the cover is required. Its primary use is for the temporary cover and protection of motor cars though it has obvious other uses such as for swimming pools, boats, the load area of trucks, awnings etc.

## Claims

1. A retracting cover device for covering a structure such as a vehicle, swimming pool or boat, comprising a flexible sheet (4) as a cover, a reel (5) rotatably mounted on reel support means for winding on and winding off the cover, and retracting mechanism for rotating the reel to wind up the cover thereon for storage, characterised in that the reel is narrow compared to the cover, and the device includes means (2, 3) for gathering the cover to enable it to be wound on to the narrow reel.

2. A cover device as claimed in claim 1, wherein the reel support means comprises a housing (1) for the device.

3. A cover device as claimed in claim 2, wherein the housing has a suitable shape to fit an available space on the structure.

4. A cover device as claimed in claim 2 or claim 3, wherein part of the housing is detachable, to allow cleaning of the housing and the cover.

5. A cover device as claimed in any of claims 2 to 4, wherein the housing has drainage outlets.

6. A cover device as claimed in any preceding claim, wherein the retracting mechanism is operated by an electric motor (6).

7. A cover device as claimed in claim 6, having gearing (8, 9) between the motor and the reel.

8. A cover device as claimed in claim 7, having disengaging means between the motor and the reel.

9. A cover device as claimed in claim 8, wherein the disengaging means is a centrifugal clutch (7).

10. A cover device as claimed in claim 8, wherein the disengaging means is a solenoid.

11. A cover device as claimed in claim 8, wherein the disengaging means is a pivoting gear (10).

12. A cover device as claimed in any of claims 6 to 11, wherein the cover has a switch for actuating the electric motor.

13. A cover device as claimed in any of claims 1 to 5, wherein the retracting means is a spring motor (29).

14. A cover device as claimed in any preceding claim, wherein theft-alarm means are built into the cover.

15. A cover device as claimed in claim 14, wherein the alarm means is electrically-operated.

16. A cover device as claimed in claim 15, wherein the alarm means includes a conductive path or paths through the cover.

17. A cover device as claimed in claim 16, wherein the alarm means is made operational using direct current, radio frequency coupling or phase-shift pulses.

18. A cover device as claimed in claim 14, wherein the alarm means includes a fibre optical path in the cover.

19. A cover device as claimed in any preceding claim, comprising a position-sensing device for the reel.

20. A cover device as claimed in claim 19, wherein the position-sensing device is a rotational sensor.

21. A cover device as claimed in any preceding claim, wherein the means for gathering the cover comprises a bell mouth of relatively small size compared to the width of the cover.

22. A cover device as claimed in claim 21, comprising a housing, wherein the bell mouth is located in the housing.

23. A cover device as claimed in claim 21, wherein the outer end of the cover is fitted with a plug adapted to close the bell mouth.

24. A structure having a retractable cover, which comprises, integral therewith, a cover device as claimed in any preceding claim.

25. A structure having a retractable cover, on which a cover device as claimed in any of claims 1 to 23 is fitted at one end, and which has means for attaching the cover to the other end thereof.

26. A structure as claimed in claim 25, wherein the means for attaching the cover is lockable.

27. A structure as claimed in claim 25 or claim 26, wherein the means for gathering the cover is as defined in any of claims 21 to 23, and the bell mouth is located at or in a wall of the structure and is connected by a guiding duct to the device.

28. A structure as claimed in any of claims 24 to 27, which is a vehicle, swimming pool or boat.

**Patentansprüche**

1. Vorrichtung mit zurückziehbarer Decke zum Bedecken eines Aufbaus wie z.B. eines Fahrzeuges, Schwimmbades oder Bootes, umfassend eine flexible Lage (4) als Decke, eine Rolle (5), drehbar auf einem Rollenlagerungsmittel zur Auf-und Abwicklung der Decke gelagert, und einen Rückzugmechanismus zum Drehen der Rolle, um die Decke darauf zur Lagerung aufzuwickeln, dadurch gekennzeichnet, daß die Rolle im Vergleich zur Decke schmal ist, und daß die Vorrichtung Mittel (2, 3) zum Zusammenziehen der Decke umfaßt, damit sie auf die schmale Rolle aufgewickelt werden kann.

2. Vorrichtung mit zusammenziehbarer Decke nach Anspruch 1, bei der das Rollenlagerungsmittel ein Gehäuse (1) für die Vorrichtung umfaßt.

3. Vorrichtung nach Anspruch 2, bei der das Gehäuse eine geeignete Form besitzt, die an einen geeigneten Raum für den Aufbau angepaßt ist.

4. Vorrichtung nach Anspruch 2 oder 3, bei der ein Teil des Gehäuses lösbar ist, um eine Säuberung des Gehäuses und der Decke bzw. der Abdeckung zu ermöglichen.

5. Vorrichtung nach irgendeinem der Ansprüche 2 bis 4, bei der das Gehäuse Abflußauslässe besitzt.

6. Vorrichtung nach irgendeinem der vorstehenden Ansprüche, bei der der Rückzugsmechanismus durch einen Elektromotor (6) betätigt wird.

7. Vorrichtung nach Anspruch 6, die ein Getriebe (8, 9) zwischen Motor und Rolle besitzt.

8. Vorrichtung mit zurückziehbarer Decke nach Anspruch 7, die eine Auslöse- bzw. Freigabevorrichtung zwischen Motor und Rolle besitzt.

9. Vorrichtung nach Anspruch 8, bei der die Freigabevorrichtung eine Zentrifugalkupplung (7) ist.

10. Vorrichtung nach Anspruch 8, bei der die Freigabevorrichtung ein Solenoid darstellt.

11. Vorrichtung nach Anspruch 8, bei der die Freigabevorrichtung ein Schwenkgetriebe (10) darstellt.

12. Vorrichtung nach irgendeinem der Ansprüche 6 bis 11, bei der die Decke einen Schalter zur Betätigung des Elektromotors aufweist.

13. Vorrichtung nach irgendeinem der Ansprüche 1 bis 5, bei der das Rückzugsmittel ein Federmotor (29) ist.

14. Vorrichtung nach irgendeinem der vorstehenden Ansprüche, bei der ein Diebstahlalarm in die Decke eingebaut ist.

15. Vorrichtung nach Anspruch 14, bei der der Diebstahlalarm elektrisch betrieben ist.

16. Vorrichtung nach Anspruch 15, bei der der Diebstahlalarm einen Leitungsweg oder -wege durch die Decke umfaßt.

17. Vorrichtung nach Anspruch 16, bei der der Diebstahlalarm unter Verwendung eines Gleichstroms, Radiofrequenzkupplung oder Phasenschieberimpulse betätigt wird.

18. Vorrichtung nach Anspruch 14, bei der der Diebstahlalarm einen faseroptischen Weg in die Decke umfaßt.

19. Vorrichtung nach einem der vorstehenden Ansprüche, umfassend ein Positionsfühlglied für die Rolle.

20. Vorrichtung nach Anspruch 19, bei der das Positionsfühlglied ein Rotationssensor ist.

21. Vorrichtung nach irgendeinem der vorstehenden Ansprüche, bei der das Mittel zum Zusammenziehen der Decke einen trichterförmigen Mund mit relativ geringer Größe im Vergleich zur Breite der Decke besitzt.

22. Vorrichtung nach Anspruch 21, umfassend ein Gehäuse, bei dem der trichterförmige Mund im Gehäuse angeordnet ist.

23. Vorrichtung nach Anspruch 21, bei der das äußere Ende der Decke mit einem Stopfen versehen ist, der ausgelegt ist, um den trichterförmigen Mund zu schließen.

24. Aufbau bzw. Struktur mit einer zurückziehbaren Decke, die integral mit einer Vorrichtung nach irgendeinem der vorstehenden Ansprüche ausgebildet ist.

25. Aufbau bzw. Struktur mit einer zurückziehbaren Decke, an der eine Vorrichtung gemäß irgendeinem der Ansprüche 1 bis 23 angebracht ist und welche ein Mittel zur Anbringung der Decke an deren anderem Ende besitzt.

26. Aufbau bzw. Struktur nach Anspruch 25, bei dem das Mittel zur Befestigung der Decke verschließbar ist.

27. Aufbau bzw. Struktur nach Anspruch 25 oder Anspruch 26, bei dem das Mittel zum Zusammenziehen der Decke gemäß irgendeinem der Ansprüche 21 bis 23 ausgebildet ist, und wobei der trichterförmige Mund an oder in einer Wand des Aufbaus bzw. der Struktur angeordnet und durch einen Führungskanal mit der Vorrichtung verbunden ist.

28. Aufbau bzw. Struktur nach irgendeinem der Ansprüche 24 bis 27, der ein Fahrzeug, Schwimmbad oder Boot darstellt.

**Revendications**

1. Bâche rétractable pour couvrir une structure telle qu'un véhicule, une piscine ou un bateau, comportant une feuille flexible (4) telle qu'une bâche, une bobine (5) montée, avec liberté de rotation, sur un moyen support de bobine pour enrouler et dérouler la bâche, et un mécanisme de rétraction pour entraîner en rotation la bobine pour y enrouler la bâche pour la ranger, caractérisé en ce que la bobine est étroite en comparaison de la bâche et en ce que le dispositif comporte des moyens (2, 3) pour rassembler la bâche pour lui permettre de s'enrouler sur la bobine étroite.

2. Dispositif de bâche selon la revendication 1, dans lequel le moyen support de la bobine est constitué d'un boîtier (1) pour le dispositif.

3. Dispositif de bâche selon la revendication 2, dans lequel le boîtier a une forme convenable pour s'adapter à l'espace disponible de la structure.

4. Dispositif de bâche selon la revendication 2 ou 3, dans lequel une partie du boîtier est détachable pour permettre le nettoyage du boîtier et de la bâche.

5. Dispositif de bâche selon l'une quelconque des revendications 2 à 4, dans lequel le boîtier présente des sorties d'évacuation de l'eau.

6. Dispositif de bâche selon l'une quelconque des revendications précédentes, dans lequel le mécanisme de rétraction est commandé par un moteur électriuqe (6).

7. Dispositif de bâche selon la revendication 6, présentant des engrenages (8, 9) entre le moteur et la bobine.

8. Dispositif de bâche selon la revendication 7, présentant un moyen de débrayage entre le moteur et la bobine.

9. Dispositif de bâche selon la revendication 8, dans lequel le moyen de débrayage est un embrayage centrifuge (7).

10. Dispositif de bâche selon la revendication 8, dans lequel le moyen de débrayage est une bobine.

11. Dispositif de bâche selon la revendication 2, dans lequel le moyen de débrayage est un pignon pivotant (10).

12. Dispositif de bâche selon l'une quelconque des revendications 6 à 11, dans lequel la bâche comprote un commutateur pour actionner le moteur électrique.

13. Dispositif de bâche selon l'une quelconque des revendications 1 à 5, dans lequel le moyen de rétraction est un moteur à ressort (29).

14. Dispositif de bâche selon l'une quelconque des revendications précédentes, dans lequel des moyens déclenchant une alarme en cas de vol sont incorporés dans la bâche.

15. Dispositif de bâche selon la revendication 14, dans lequel les moyens déclenchant l'alarme sont commandés électriquement.

16. Dispositif de bâche selon la revendication 15, dans lequel les moyens déclenchant l'alarme comportent un chemin ou des chemins conducteurs dans la bâche.

17. Dispositif de bâche selon la revendication 16, dans lequel les moyens déclenchant l'alarme sont activés par l'emploi d'un couplage à courant continu, à radiofréquence ou d'impulsions de déclage de phase.

18. Dispositif de bâche selon la revendication 14, dans lequel les moyens déclenchant l'alarme comportent un chemin optique par fibre optique dans la bâche.

19. Dispositif de bâche selon l'une quelconque des revendications précédentes, comportant un dispositif de détection de position de la bobine.

20. Dispositif de bâche selon la revendication 19, dans lequel le dispositif de détection de position est un détecteur de rotation.

21. Dispositif de bâche selon l'une quelconque des revendications précédentes, dans lequel les moyens prévus pour rassembler la bâche sont constitués d'une embouchure évasée de dimension relativement faible en comparaison de la largeur de la bâche.

22. Dispositif de bâche selon la revendication 21, comportant un boîtier, dans lequel l'embouchure évasée est située dans le boîtier.

23. Dispositif de bâche selon la revendication 21, dans lequel l'extrémite extérieure de la bâche est équipée d'un bouchon prévu pour obturer l'embouchure évasée.

24. Structure présentant une bâche rétractable et comportant, d'une pièce avec elle, un dispositif de bâche selon l'une quelconque des revendications précédentes.

25. Structure présentant une bâche rétractable, sur laquelle un dispositif de bâche tel que revendiqué dans l'une des revendications 1 à 23 est monté à l'une des extrémités, et qui présente des moyens pour fixer la bâche à son autre extrémité.

26. Structure selon la revendication 25 dans laquelle les moyens de fixation de la bâche sont verrouillables.

27. Structure selon la revendication 25 ou 26, dans laquelle les moyens prévus pour rassembler la bâche sont tels que définis dans l'une quelconques des revendications 21 à 23 et dans lequel l'embouchure évasée est située sur une paroi de la structure ou dans une paroi de la structure et est reliée au dispostiif par une gaine de guidage.

28. Structure selon l'une quelconque des revendications 24 à 27, qui est un véhicule, une piscine ou un bateau.

FIG.1

EP 0 229 082 B1

FIG.2

FIG. 3

FIG. 4a

FIG. 4b

FIG. 4c

FIG. 4d

FIG. 4e

FIG.5

FIG.6

MICROPROCESSOR

reset

osc

ALARM

INPUTS

EMITTER

PROTECT LOOP

M

33

34

35

36

37

38

39

40